# EUROPEAN PATENT SPECIFICATION

(11) **EP 0 941 151 B1**
(45) Date of publication and mention of the grant of the patent: **27.02.2002**
(21) Application number: 97931914.2
(22) Date of filing: 11.07.1997
(51) Int. Cl.: B21D 51/26, B23K 26/00, B23K 11/087

(54) **WELDING PACKAGING CONTAINERS**
SCHWEISSEN VON VERPACKUNGSBEHÄLTERN
SOUDAGE D'EMBALLAGES

(30) Priority: 13.07.1996 GB 9614754
(43) Date of publication of application: 15.09.1999
(73) Proprietor: CarnaudMetalbox SA, 93400 Saint Ouen (FR)
(72) Inventor: OSBORNE, Michael Robert, Ickenham, Middlesex UB10 8QY (GB); NEWCOMB, Peter Michael, Wantage, Oxfordshire OX12 7LT (GB); WINFIELD, Richard John, Macroom, County Cork (IE)
(74) Representative: Ratliff, Ismay Hilary
(86) International application number: GB9701891
(87) International publication number: WO9802261

(56) References cited:
- EP-A- 0 369 883
- DE-A- 4 313 871
- PATENT ABSTRACTS OF JAPAN vol. 95, no. 011 & JP 07 290258 A (NIPPON STEEL CORP), 7 November 1995,

## Description

This invention relates to a method of forming a tubular can body of material comprising a metal substrate laminated with a polymer layer or coated with a lacquer. More particularly, it relates to the problem of welding of materials such as lacquer coated sheet metal and metal/polymer laminates for forming into can bodies.

It has recently become popular for laminates of polymer and metal to be used in the manufacture of can bodies and ends. This is desirable for recycling purposes since conventional lacquers produce organic volatiles during application and toxic fumes when burnt. Such laminates comprise a metal substrate of tinplate which is protected by a thin chrome layer in order to prevent oxidation of the tin and laminated with a polymer layer on either or both sides. Alternatively, the laminate may comprise a metal substrate of tin free steel, onto which a polymer layer is laminated.

One known method of lamination comprises thermally bonding the polymer to the metal substrate. In particular where a polymer is applied to both sides of the metal substrate, the polymer is provided with a thin bond layer, for example obtained by coextrusion. Thus a composite of coextruded polyethylene terphthalate (PET) and a copolyester bond layer may be thermally bonded to one side of the metal substrate and, simultaneously, a composite layer of polypropylene and a bond layer of maleic anhydride graft modified polypropylene thermally bonded to the opposite side. The bond formed by softening the intermediate bond layers during lamination is exceptionally strong.

In the formation of three piece can bodies, the laminate or lacquered sheet is first cut into blanks. Each blank must have uncoated side margins so that, when it is formed into a cylinder, overlapping edges can be welded together to form the can body.

The complete removal of the polymer layer in a metal/polymer laminate (or of a lacquer coating from a metal substrate) is required if the metal is to be weldable. This is necessary for example for resistance welding in order that the contact resistance be low enough. If there is any contamination due to polymer or lacquer remaining on the metal, or if the metal is damaged in any way, the weld cannot be completed successfully.

Polymeric material is particularly difficult to remove successfully from metal/polymer laminates in order to expose the underlying metal substrate for welding. Furthermore, where the polymer has been thermally bonded to the metal via a bond layer, as described above, this bond layer is exceptionally difficult to remove completely without damage to the underlying substrate.

A system for the removal of a polymer coating from sheet metal for the manufacture of cans is described in DE-4313871 (Krupp Maschinentechnik GmbH). In that patent application, the coated metal is cut into strips and the edges of the strips are then stripped of polymer by passing under a laser beam before cutting into can blanks.

Although the edge cleaning by laser according to the prior art seems to produce visually acceptable margins, in practice we have found that welds made following such cleaning of lacquered sheet metal or of metal/polymer laminates were inadequately bonded. The degree of bonding obtained using such methods was typical of a cold weld. This indicates that the prior art systems give incomplete edge cleaning which is unacceptable for welding purposes. This would arise if there is any contamination of the surface of the metal, even if the remaining polymer or lacquer is very thin, for example if it is the bond layer used in thermal lamination. A satisfactory weld would also only be possible if there has been no damage to the underlying metal substrate, ie the tin layer where the substrate is tinplate.

According to the present invention, there is provided a method of forming a tubular can body of material comprising a metal substrate laminated with a polymer layer, the method comprising:
stripping margins of the polymer layer from the metal substrate by applying a pulsed laser beam having a pulse duration of less than 10µs and a peak power output of at least 0.1 megawatt to remove all the polymer along the margin without damage to the metal;
forming a blank of the material into a tube by overlapping margins of metal substrate; and
welding the margins of metal together to form a tubular can body, the weld having an extrusion width of from 20 to 60 % of the width of the overlap.

The invention also provides a method of forming a tubular can body of material comprising a metal substrate coated with a lacquer according to claim 9.

During the welding process, softened metal is squeezed out, or "extruded", from the overlap by the pressure applied. If there is little or no extrusion, fusion will not have occurred. If the extrusion is less than 20%, then the weld is likely to be cold. Preferably, this extrusion is smooth and consistent along the whole length of the weld. Where the extrusion is too great, the weld is likely to be brittle and may crack.

It is preferred that welding can be carried out with a minimum welding latitude of 200A, more usually at least 250A.

The lasers used in the present invention are of much higher peak power output than are CO₂ continuous wave (CW) lasers and other lasers which have been used in the prior art edge cleaning methods. For example, a CO₂ CW laser typically may have a peak power output of the order of 0.001 MW and a pulse duration of 200 µs. It was believed that it would not be possible to use lasers having higher peak powers without damaging the tin layer on the metal substrate, thereby rendering it unsuitable for welding. Furthermore, known cleaning methods using lasers having lower peak powers were generally acceptable for most purposes which do not have the requirement of a very high standard of cleaning such as is needed for welding to a commercially acceptable quality.

In one embodiment, the pulsed laser may be a TEA (transversely excited atmospheric) CO₂ laser, which has a wavelength of 9.0 to 11.0 µm, and the preferred pulse duration of the laser beam may be between 0.1 and 10 µs. Alternatively, the pulsed laser may be an excimer laser, which has a wavelength in the ultraviolet range, with a preferred pulse duration of about 25 ns.

The laser beam of the TEA CO₂ laser may have a fluence of between 0.5 and 10 Jmm⁻², typically between 0.8 and 8 Jmm⁻². Where the fluence is too low, incomplete removal of the coating may arise. Where the fluence is too high, there is a risk that the metal substrate may become damaged. Either situation results in unacceptable material conditions for welding.

Laminates which may be welded using the method of the present invention include laminates of metal and polymers such as pigmented PET, clear and white polypropylene. In addition, coatings of lacquers or metals, such as the chrome passivation layer used on tin free steel (electro-chrome coated steel) or the thicker chrome coating on tin free steel may be removed prior to welding in the same manner.

Preferred embodiments of the invention will now be described, by way of example, with reference to the drawings, in which:
Figure 1 is a side section of typical tinplate substrate;
Figure 2 is a schematic side section of tinplate coated with polymer;
Figure 3 is a schematic transverse side section of a fully acceptable weld;
Figure 4 is a graph showing a typical pulse shape for an excimer laser;
Figure 5 is a graph showing a typical pulse shape for a TEA CO₂ laser;
Figure 6 is a schematic diagram of a system for removal of a coating using a TEA laser; and
Figure 7 is an enlarged schematic view of a laser interaction area on the workpiece.

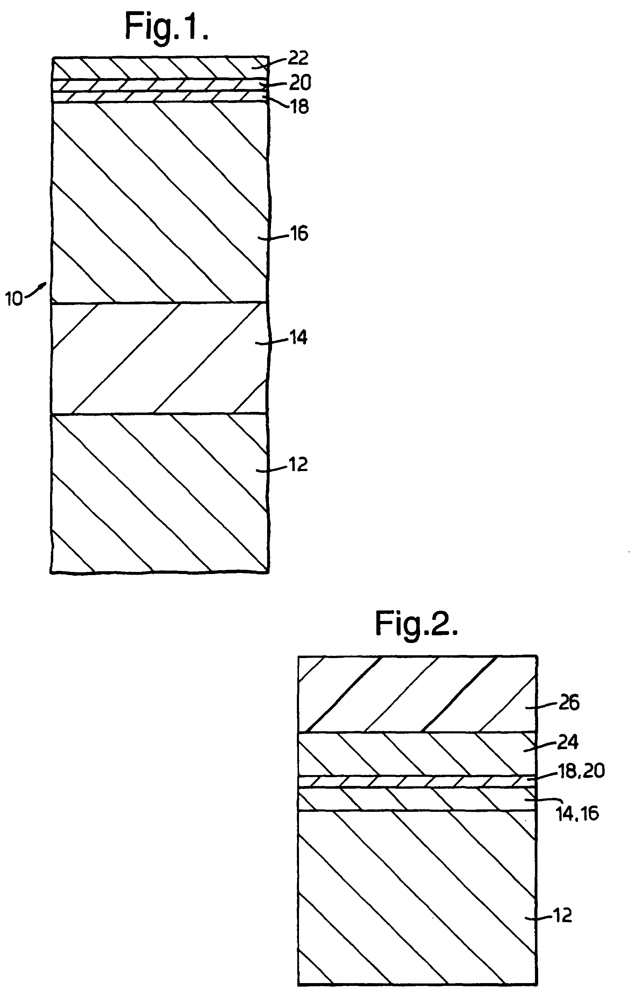

Figure 1 shows a schematic side section of "E 2.8" tinplate 10. The tinplate substrate comprises a steel base layer 12 which is 0.2 mm thick, plated with a tin-iron alloy layer 14 and a tin layer 16 which are respectively 90x10⁻⁶ mm and 300x10⁻⁶ mm. Finally the tin layer is coated with a thin layer of chromium 18 (0.3x10⁻⁶ mm)on which is a layer of chromium oxide 20 (0.8x10⁻⁶ mm) and finally a protective oil film 22 (4x10⁻⁶ mm).

A polymer 26 is usually bonded to the tinplate of figure 1 by a bonding layer 24 as shown in figure 2. The removal of this bonding layer and not just the polymer has been found to be critical in the formation of a good weld. The chromium 18, 20 and oil 22 layers on the tinplate are sufficiently thin that they are removable by vaporisation during the welding process provided that complete cleaning of both polymer and bonding layer is carried out. Any bonding layer which remains after edge cleaning has been found by the present inventors to be a major problem in the welding of samples which might have appeared visually to be "edge cleaned". This is particularly a problem when white polypropylene or white PET is edge cleaned since the bond layer is clear. Removal of the white layer can therefore indicate on inspection with the naked eye that the margin is clear although in practice the clear bond layer may not have been successfully removed.

Another problem that arises in prior art cleaning methods is that even if the polymer 26 and its bonding layer 24 have been removed, the tin layer itself may be affected detrimentally. Typically, this is caused by overheating of the tin, which results in depletion of free tin coating and growth of the tin-iron alloy layer. This damage can also lead to incomplete weld formation. Since this depletion was already a recognised problem when using low peak power output lasers, an increase in this peak power by using different lasers was not considered because further damage to the free tin coating would be expected.

A satisfactory weld is assessed by means of its "welding latitude". This is the range of current which when applied to form a weld will give a weld which is neither too cold nor having excessive splash. The minimum current setting at one end of the range will just avoid a cold weld with little extrusion, whereas the maximum setting just avoids one which is too hot and brittle. The welding latitude is the difference between these two current settings. A cold weld can also be easily ripped apart and splash arises due to excessive extrusion of molten metal as a consequence of excessive heat generated during the welding process. For example, two layers of the tinplate of figure 1 can be welded with a 0.7kA welding latitude.

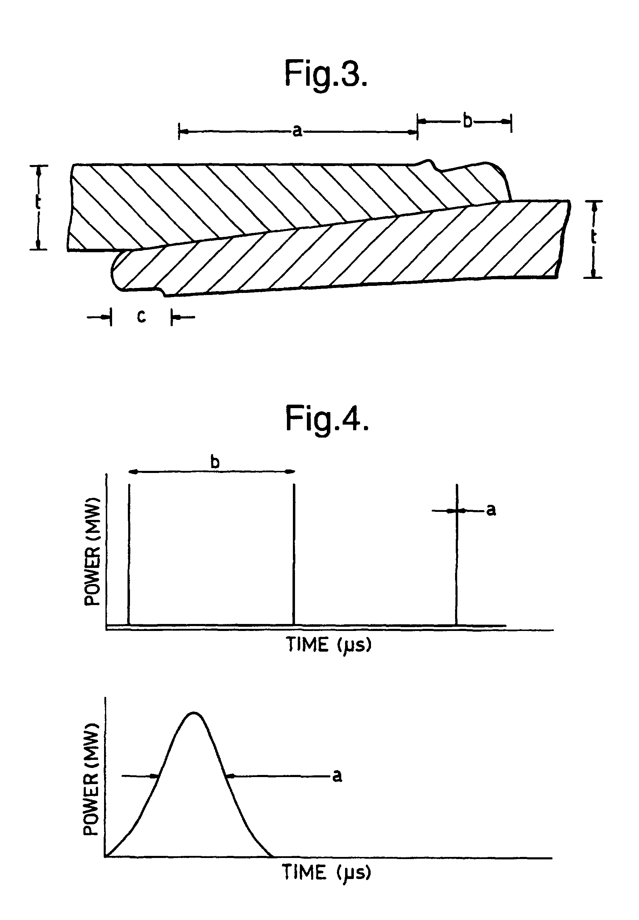

Figure 3 shows a transverse side section of a fully acceptable weld. The welded region has been compressed by the application of pressure during welding to a thickness of approximately 1.4t, which has led to the extrusion of softened metal from the joint. In the figure, the upper extrusion b corresponds to about 40% of the overlap width a, whereas the lower extrusion c is about 25% of the overlap width a. A difference in the amount of extrusion is often desirable for aesthetic reasons, such as a greater extrusion being preferred within the container, although for the weld to be fully acceptable the extrusion must be at least 20% and not more than 60% of the overlap width.

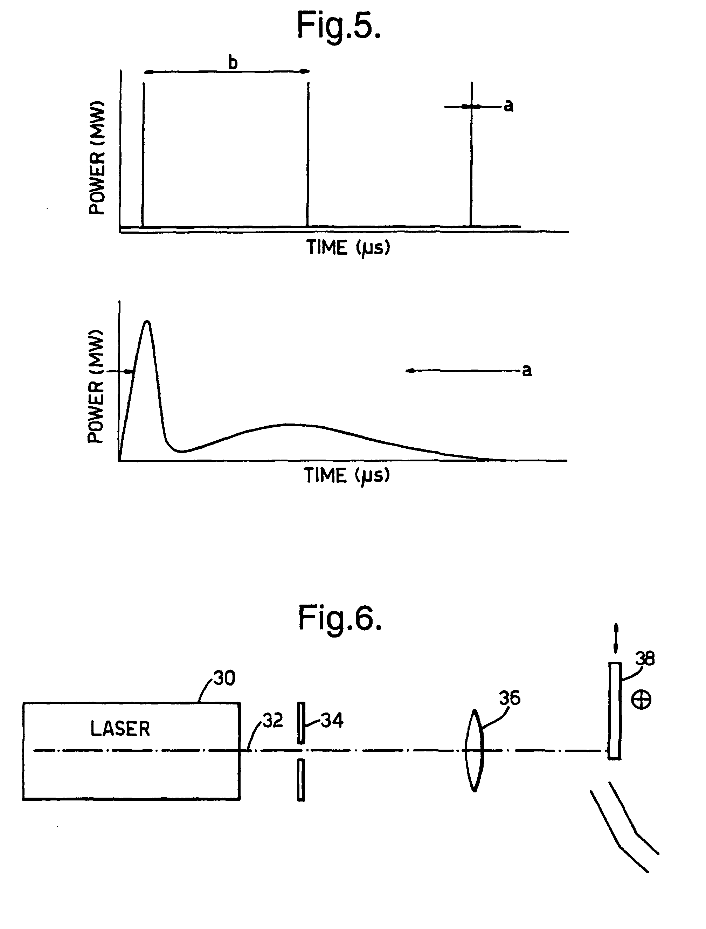

Pulse shapes and durations are shown schematically for excimer and TEA CO₂ pulsed lasers in figures 4 and 5 respectively. It can be seen from figures 4a and 5a that both the excimer and the TEA laser produce very short pulses with high peak power. Typically, the pulse duration "a" for the excimer is 25ns and for the TEA laser is 3 to 5µs. In the schematic graphs of figures 4b and 5b, the pulse duration "a" has been magnified to show the different waveforms more clearly.

The selection of an excimer laser in the removal of coatings to create a weld margin does give satisfactory results but there is a risk at such high peak powers that the tin layer may be overheated and consequently affect welding latitudes. Furthermore, the processing speeds are much higher for TEA CO₂ lasers than for excimer lasers and the operating costs of TEA CO₂ lasers are much lower than for excimer lasers. Consequently, the preferred embodiment discussed below uses a TEA CO₂ laser.

A system for removal of a coating using a TEA CO₂ laser is shown in figure 6. A laser 30 emits a laser beam 32 of 5µs in pulse duration and corresponding to the waveform of figure 4. The ideal beam quality is obtained when the energy distribution across the beam is completely uniform, ie it looks like a "top hat". Preferably, this is achieved by making adjustments within the laser. Alternatively, a rectangular aperture 34 may be used to remove the edges of the beam, leaving the "top hat" profile but this is not a preferred option since it reduces available energy. The beam area is controlled by laser optics (here represented by convex lens 36) to the desired rectangular interaction area. The workpiece sample 38 is mounted on a movable frame to enable the laser beam to track along the workpiece at the desired line speed.

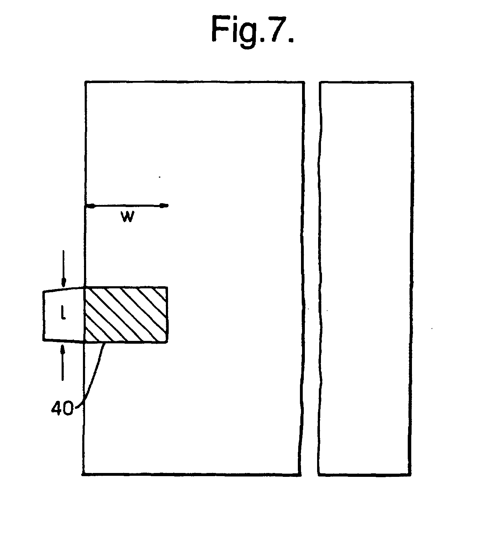

A close-up of the laser interaction area 40 is shown in figure 7. From this figure it can be seen that the laser optics gives an interaction area of constant, selected width "w" and length "l". The length of the interaction area dictates the achievable cleaning speed using a beam pulsing at a given rate with a particular power. This length is ideally between 5 and 500 mm. The laser optics are therefore selected in order to achieve an interaction area having a length within this desired range.

A preferred weld margin for a resistance weld is typically between 1 and 3 mm, although smaller margins may be weldable, with a pre-weld overlap of 0.4 to 0.7 mm.

For production of welded can bodies from a laminate of sheet metal having a polymer layer thermally bonded on one side, this interaction area is moved along the strip (typically by movement of the can blank) at a line speed of up to 60 to 70 m/min. A second laser may be used to strip coating from the opposite edge of the can blank so that opposing edges are cleaned of coating before the blank is formed into the body shape with the edges overlapping and passed to a welder such as a resistance welder to form the can body side seam. Alternatively, the laser beam may be split into two beams for stripping both edges using a single laser source. It is necessary to clean margins on both edges where a resistance welder is used so as to avoid contact between the electrodes and the coating, particularly where this is a polymer or other insulating material. It is also essential that there is no polymer in the overlap.

Where the metal substrate has a coating on both sides, such as a polymer/metal/polymer laminate, a margin of coating needs to be removed from opposing edges and from both faces of the blank. Although it is possible to split a single laser beam into four in order to achieve this, provided that the laser output is such that the fluence is sufficient to strip coating effectively at the required speed, a pair of lasers or four independent lasers will probably be needed.

### Comparative Example 1

Normal and lacquered body blanks were edge cleaned using a CO₂ continuous wave (CW) laser. The laser cleaned blank could not be welded to a commercially acceptable quality. Examination of the blank revealed the following defects:
- only a narrow stripe of lmm width had been affected;
- small deposits of lacquer debris had accumulated along the burred edge of the blank;
- 0.5µm thick lacquer remained as a surface layer on the blank;
- some lacquer exfoliation had arisen.
Clearly the incorporation of the organic residue in the weld prevents welds of acceptable quality with any extrusion from being obtained.

### Comparative Example 2

Blanks of tinplate coated on one side with 25µm white PET and 40µm polypropylene on the other side were edge cleaned using a CW CO₂ laser. Each blank was cut into sample sections. One set of blank samples received a single pass at an average power of 300W and a second set received two passes at 300W. Difficulty was experienced in welding the blanks and analysis showed polymer residue in the weld margin.

Examination of the samples revealed the following defects:
- on all samples, a 5µm layer of polymer on the whole of the margins on both sides of the steel;
- burr of up to 30% increase in metal thickness at the edge of the plate, causing a pool of polymer at the plate edge;
- residual polymer on the white PET side was clear except for a small area adjacent to the unaffected film where the pigmented film tapered out;
- residue still remained even with the blank samples which had a second pass of the laser.

It was believed that the clear residue on the white PET side was the bonding layer. Since this residue was clear, it appeared on exmination with the naked eye that the margin was clean. However, the difficulty in obtaining a satisfactory weld and examination under microscope revealed the presence of polymer residue.

### Example 1

A laminate comprising 25µm white PET ("25WPET"), 0.19 mm single reduced E 2.0/2.0 tinplate and 40µm clear polypropylene ("40PP") was cut into can blanks. Four 3 mm margins were produced by laser edge cleaning using a TEA CO₂ pulsed laser having a pulse duration of 5µs. The laser fluence was 5.3 Jmm⁻² for a line speed of 1 mms⁻¹.

The blanks were formed into can bodies with the PET side external. Side seams were welded using a resistance welder with a current potentiometer setting of 4.15 kA. Unlaminated control samples were welded using the same potentiometer setting. Each weld was radiographed for examination and the radiographs showed a range of weld conditions and variability from can to can.

Metallurgical transverse and longitudinal sections were then taken from one of each of the welds (laminated/unlaminated) to assess the weld quality. The results are summarised in table 1, items 4 and 5.

### Example 2

A laminate comprising 40µm clear polypropylene ("40PP")and 0.19 mm single reduced E 2.0/2.0 tinplate was cut into can blanks and edge cleaned using the system of example 1. The blanks were formed into can bodies with the polypropylene side internal. Side seams were welded using a resistance welder with current potentiometer settings of 3.8 and 4.1 kA. Unlaminated control samples were welded using the same potentiometer settings. Each weld was radiographed for examination and as in example 1, these radiographs showed a range of weld conditions and variability from can to can.

Metallurgical transverse and longitudinal sections were taken of all the welds to assess the weld quality. These results are also summarised in table 1, items 1-3.

The welds of both example 1 and example 2 exhibited variable pre-weld overlaps although the level of variation within individual samples was generally acceptable. However, this variation can give rise to significant variation in weld quality at similar welder settings. The variability from can to can shown by the radiographs also makes direct comparison difficult. However, no evidence of undesirable weld features was attributable either to the laminating or to the edge cleaning process. Fully acceptable welds from laminated can blanks which have been edge cleaned using a TEA CO₂ pulsed laser were produced using the higher current potentiometer settings.

### Example 3

Samples of laminates of tinplate and polypropylene (pp) were welded following removal of a welding margin using a TEA CO₂ laser at differing fluence levels. The welding latitudes for these samples are provided in table 2. The welder used was a Soudronic Fbb 5501 throughout. It can be seen that for the samples of white pp/tinplate laminate, a larger welding latitude was available where the fluence level was lower. At high fluence levels, the latitude reduces due to damage to the free tin layer. In addition, the welding latitude increases if the welding speed is reduced.

**Table 1**

| | Sample | Current setting (kA) | Indicated pre-weld overlap (mm) | Weld thickness (mm) | Weld quality |
|---|---|---|---|---|---|
| 1 | 40PP internal | 3.8 | 0.43 - 0.56 | 1.46- 1.51 | acceptable |
| 2 | 40PP internal | 4.1 | unclear | 1.45 - 1.6 | acceptable |
| 3 | unlaminated | as 2 | 0.57 - 0.65 | 1.55 - 1.65 | acceptable |
| 4 | 25WPET/40PP | 4.15 | 0.56 - 0.67 | 1.54 - 1.63 | good |
| 5 | unlaminated | as 4 | 0.55 - 0.63 | 1.57- 1.59 | good |

**Table 2**

| Laminate | Welding latitude (kA) | Welding speed/force | Fluence level |
|---|---|---|---|
| 0.19 E2.0 tinplate (control) | 0.85 | 42m/min 40kgf | |
| 0.19 E2.0 tinplate 40µm clear pp | 0.77 | 42m/min 40kgf | |
| 0.19 E2.0 tinplate 40µm white pp | 0.55 | 53m/min 45kgf | minimum |
| 0.19 E2.0 tinplate 40µm white pp | 0.42 | 53m/min 45kgf | mid |
| 0.19 E2.0 tinplate 40µm white pp | 0.32 | 53m/min 45kgf | high |

## Claims

1. A method of forming a tubular can body of material comprising a metal substrate (12,14,16) laminated with a polymer layer (26), the method comprising:
stripping margins of the polymer layer (26) from the metal substrate by applying a pulsed laser beam having a pulse duration of less than 10µs and a peak power output of at least 0.1 megawatt to remove all the polymer along the margin without damage to the metal;
forming a blank of the material into a tube with margins of metal substrate adjacent to each other; and
welding the margins of metal together to form a tubular can body, the weld having an extrusion width of from 20 to 60 % of the width of the overlap.

2. A method according to claim 1, in which welding is carried out with a minimum welding latitude of 200A.

3. A method according to any one of claims 1 to 3, in which the pulsed laser is a TEA (transversely excited atmospheric) CO₂ laser.

4. A method according to claim 3, in which the pulse duration of the laser beam is between 0.1 and 10 µs.

5. A method according to any one of claims 1 to 3, in which the pulsed laser is an excimer laser with a pulse duration of about 25 ns.

6. A method according to any one of claims 1 to 5, in which the laser beam has a fluence on the coated metal sheet of between 0.5 and 10 Jmm⁻².

7. A method according to claim 6, in which the fluence is between 0.5 and 8 Jmm⁻².

8. A method according to any one of claims 1 to 7, comprising welding of laminates of metal and polymers such as clear and white polypropylene, clear and pigmented polyethylene terephthalate (PET).

9. A method of forming a tubular can body of material comprising a metal substrate coated with a lacquer, the method comprising:
stripping margins of the lacquer coating from the metal substrate by applying a pulsed laser beam having a pulse duration of less than 10µs and a peak power output of at least 0.1 megawatt to remove all the lacquer along the margin without damage to the metal;
forming a blank of the material into a tube with margins of metal substrate adjacent to each other; and
welding the margins of metal together to form a tubular can body, the weld having an extrusion width of from 20 to 60 % of the width of the overlap.

## Patentansprüche

1. Verfahren zum Formen eines röhrenförmigen Dosenrumpfes aus Material, das ein mit einer Polymerschicht (26) laminiertes Metallsubstrat (12,14,16) aufweist, wobei das Verfahren aufweist:
Entfernen von Rändern der Polymerschicht (26) von dem Metallsubstrat durch Anwenden eines Impuls-Laser-Strahls mit einer Pulsdauer von weniger als 10 µs und einer Spitzenleistungsabgabe von wenigstens 0,1 Megawatt, um das gesamte Polymer entlang des Randes ohne Beschädigung des Metalls zu entfernen;
Formen eines Zuschnitts des Materials zu einem Rohr, wobei Metall-substratränder aneinanderliegen; und
Zusammenschweißen der Metallränder, um einen röhrenförmigen Dosenrumpf zu bilden, wobei die Schweißung eine Extrusionsbreite von 20 bis 60 % der Breite der Überlappung aufweist.

2. Verfahren nach Anspruch 1, bei dem Schweißen mit einem Minimum-Schweißspielraum von 200 A durchgeführt wird.

3. Verfahren nach einem der Ansprüche 1 bis 2, bei dem der Impuls-Laser ein TEA (transversal angeregter atmosphärischer)-CO₂-Laser ist.

4. Verfahren nach Anspruch 3, bei dem die Pulsdauer des Laserstrahls zwischen 0,1 und 10 µs liegt.

5. Verfahren nach einem der Ansprüche 1 bis 3, bei dem der Impuls-Laser ein Excimer-Laser mit einer Pulsdauer von ungefähr 25 ns ist.

6. Verfahren nach einem der Ansprüche 1 bis 5, bei dem der Laserstrahl eine Energie je Flächeneinheit auf dem beschichteten Blech zwischen 0,5 und 10 Jmm⁻² hat.

7. Verfahren nach Anspruch 6, bei dem die Energie je Flächeneinheit zwischen 0,5 und 8 Jmm⁻² liegt.

8. Verfahren nach einem der Ansprüche 1 bis 7, wobei das Verfahren Schweißen von Schichtstoffen aus Metall und Polymeren, wie z.B. klarem und weißem Polypropylen, klarem und pigmentiertem Polyethylenterephtalat (PET), aufweist.

9. Verfahren zum Formen eines röhrenförmigen Dosenrumpfes aus Material, das ein mit einem Lack beschichtetes Metallsubstrat aufweist, wobei das Verfahren aufweist:
Entfernen von Rändern der Lackbeschichtung von dem Metallsubstrat durch Anwenden eines Impuls-Laser-Strahls mit einer Pulsdauer von weniger als 10 µs und einer Spitzenleistungsabgabe von wenigstens 0,1 Megawatt, um den gesamten Lack entlang des Randes ohne Beschädigung des Metalls zu entfernen;
Formen eines Zuschnitts des Materials zu einem Rohr, wobei Metallsubstratränder aneinanderliegen; und
Zusammenschweißen der Metallränder, um einen röhrenförmigen Dosenrumpf zu bilden, wobei die Schweißung eine Extrusionsbreite von 20 bis 60 % der Breite der Überlappung aufweist.

## Revendications

1. Procédé de formage d'un corps de boîte de conserve tubulaire en une matière comprenant un substrat métallique (12, 14, 16) stratifié avec une couche polymère (26), ledit procédé comprenant :
le dénudage des lisières de la couche de polymère (26) du substrat métallique en appliquant un rayon laser pulsé ayant une durée d'impulsion inférieure à 10 µs et une puissance de sortie de pointe d'au moins 0,1 mégawatt pour enlever tout le polymère le long de la lisière sans endommager le métal ;
la formation d'un tube à partir d'un flan de la matière, les lisières du substrat métallique étant adjacentes ; et
la soudure des lisières de métal les unes avec les autres de façon à former un corps de boîte de conserve tubulaire, la soudure ayant une largeur d'extrusion comprise entre 20 et 60 % de la largeur du recouvrement.

2. Procédé selon la revendication 1, dans lequel le soudage est effectué avec une latitude de soudage minimale de 200 A.

3. Procédé selon l'une quelconque des revendications 1 à 3, dans lequel le laser en régime pulsionnel est un laser TEA (atmosphérique excité transversalement) au CO₂.

4. Procédé selon la revendication 3, dans lequel la durée d'impulsion du rayon laser est comprise entre 0,1 et 10 µs.

5. Procédé selon l'une quelconque des revendications 1 à 3, dans lequel le laser en régime pulsionnel est un laser excimer ayant une durée d'impulsion d'environ 25 ns.

6. Procédé selon l'une quelconque des revendications 1 à 5, dans lequel le rayon laser a une fluence sur la feuille métallique revêtue comprise entre 0,5 et 10 Jmm⁻².

7. Procédé selon la revendication 6, dans lequel la fluence est comprise entre 0,5 et 8 Jmm⁻².

8. Procédé selon l'une quelconque des revendications 1 à 7, comprenant le soudage de stratifiés de métal et de polymères tels que le polypropylène clair et blanc, le polytéréphtalate d'éthylène (PET) clair et pigmenté.

9. Procédé de formage d'un corps de boîte de conserve tubulaire en une matière comprenant un substrat métallique revêtu d'une laque, ledit procédé comprenant :
le dénudage des lisières du revêtement de laque du substrat métallique en appliquant un rayon laser pulsé ayant une durée d'impulsion inférieure à 10 µs et une production d'énergie de pointe d'au moins 0,1 mégawatt pour enlever toute la laque le long de la lisière sans endommager le métal ;
la formation d'un tube à partir d'un flan de la matière avec les lisières du substrat métallique adjacentes l'une à l'autre ; et
la soudure des lisières de métal les unes avec les autres de façon à former un corps de boîte de conserve tubulaire, la soudure ayant une largeur d'extrusion comprise entre 20 et 60 % de la largeur du recouvrement.
